# EUROPEAN PATENT SPECIFICATION

(11) **EP 3 432 544 B1**
(45) Date of publication and mention of the grant of the patent: **30.06.2021**
(21) Application number: 18161539.4
(22) Date of filing: 13.03.2018
(51) Int. Cl.: H04L 29/06, G06F 21/55, H04L 29/08

(54) **SYSTEM AND METHOD OF DETERMINING DDOS ATTACKS**
SYSTEM UND VERFAHREN ZUR BESTIMMUNG VON DDOS-ANGRIFFEN
SYSTÈME ET PROCÉDÉ DE DÉTERMINATION D'ATTAQUES DDOS

(30) Priority: 17.07.2017 RU 2017125333; 02.03.2018 US 201815910616
(43) Date of publication of application: 23.01.2019
(73) Proprietor: AO Kaspersky Lab, Moscow 125212 (RU)
(72) Inventor: KHALIMONENKO, Alexander A., Moscow 125212 (RU); TIKHOMIROV, Anton V., Moscow 125212 (RU); KONOPLEV, Sergey V., Moscow 125212 (RU)
(74) Representative: Chimini, Francesco

(56) References cited:
- US-A1- 2011 214 157
- US-A1- 2016 164 912
- US-A1- 2016 381 048
- US-A1- 2017 126 709
- US-B1- 9 680 951

## Description

### FIELD OF TECHNOLOGY

The present disclosure relates to the field of computer security, and more particularly, to system and methods for detecting distributed denial-of-service (DDOS) attacks.

### BACKGROUND

At present, practically all companies and organizations are represented in one way or another on the Internet, and many of them use the Internet as a business tool. At the same time, the Internet does not provide proper protection of services "by default". Furthermore, it is not possible today to defend against a number of Internet threats by personal protection means such as firewalls, attack prevention systems, antivirus, and so forth. A glaring example of such threats is the distributed denial-of-service (DDoS) attack.

A denial-of-service (DoS) attack is a cyber-attack on a computer system in order to cause it to fail, that is, the creation of such conditions in which legitimate (authorized) users cannot gain access to the resources (servers) being provided by the system, or in which such access is slower or more difficult. The motives for such attacks may differ widely - they may serve as elements of competitive activity, a means of extortion, revenge, an expression of discontent, a demonstration of capabilities or an attracting of attention, which is most often treated as cyberterrorism. If the attack is conducted simultaneously from a large number of computers, one speaks of a DDoS attack (Distributed Denial of Service). Two main varieties of DDoS attack exist: attacks on bandwidth and attacks on applications.

Attacks on bandwidth operate by clogging the communication channels, allocated bandwidth, and equipment with a large number of packets. The chosen victims are routers, servers, and firewalls, each of which has only limited processing resources (such as memory buffers, network interface bandwidth). Under the influence of the attack, these devices may become unavailable for the handling of proper transactions (i.e., legitimate requests), or they may crash under the unanticipated heavy workload. The most common form of a cyber-attack based on clogging bandwidth is a so-called avalanche attack with packet dispatching, during which a large number of seemingly trustworthy packets of the Transport Control Protocol (TCP), the user datagram protocol (UDP), or the Internet Control Message Protocol (ICMP) are sent to a particular point.

Attacks on applications operate by exploiting features of the behavior of networking protocols (TCP, HTTP and others), and also the behavior of services and applications, and seizes the computing resources of the computer on which the object of the attack is running, not allowing it to handle legitimate transactions and requests. Examples of an attack on applications are attacks with half-open HTTP connections and attacks with erroneous HTTP connections.

Recently, so-called "Slow-Rate" or "Low and Slow" attacks are becoming increasingly popular. Such attacks utilize deficiencies in the implementation of applications at the service end (such as a web server) and make it possible to put an important service at the server end out of commission by using only a small number of requests. The traffic volume which is generated during such an attack may be extremely slight, and therefore the detection and mitigation methods for attacks on bandwidth prove to be ineffective. Further, slow-rate attacks involve seemingly legitimate traffic (i.e., in term of protocol rules) which does not violate network standards or common security policies. As such, traditional detection and mitigation methods of attacks on applications often unable to distinguish such malicious data packets from legitimate ones because of their similarity.

An example of such a slow-rate attack is the Slowloris attack. This method of attack may even be carried out by a single computer. This attack involves sending incomplete HTTP requests (partial ones, e.g., for a GET request), where the host afterwards sends additional headers, but the request itself is never completed. Thus, the server reserves all the sockets for HTTP processing, which results in a denial of service of other clients. The attack takes a long time.

In a number of recent patent publications, such as United States Publication No. 2016/0226896, it has been proposed to perform an analysis of the data based on a network protocol, specifically the Secure Sockets Layer (SSL) protocol. Such analysis is highly protocol-specific, however. As such, the known analytical techniques may be rendered useless in detecting or mitigating such slow-rate attacks in the event that future attacks utilize other protocols or if the specific protocol changes (e.g., in a next version). A more flexible and universal solution is needed for the analysis of data packets from users regardless of the protocol being used for an earlier determination of a possible network attack on a server.

US2016/164912 A1 and US 2016/381048 A1 disclose methods and systems for detection and mitigation of denial-of-service (DoS) attacks. US 2011/214157 A1 discloses an apparatus and method to distribute applications and services throughout a network and to secure the network.

Moreover, cases are known where another attack was carried out behind a DDoS attack, known as a targeted cyberattack or Advanced Persistent Threat (APT). Therefore, a solution is needed which is able not only to discover and neutralize a DDoS attack, but also to provide feedback to the entire protective infrastructure of the organization at which the DDoS attack is directed. An analysis of the existing prior art leads to the conclusion that the previous technologies are ineffective and in certain cases cannot be applied, and their deficiencies are solved by the examples of present disclosure.

### SUMMARY

Disclosed are systems and methods for detecting distributed denial-of-service (DDoS) attack. An exemplary method includes receiving one or more requests from a first user for a service executing on a server, and generating a first vector associated with the first user comprised of a plurality of characteristics indicative of the first user accessing the service. The method further includes calculating a comparison between the first vector and a reference vector, wherein the reference vector comprises an averaged distribution of characteristics for a plurality of users accessing the service. The method includes determining that the service is under a denial-of-service attack based on the comparison between the first vector and the reference vector.

In another example, a system configured for protecting against a distributed denial-of-service (DDoS) attack is provided. The system includes a memory device, and a hardware processor. The hardware processor is configured to receive one or more requests from a first user for a service executing on a server, and generate a first vector associated with the first user comprised of a plurality of characteristics indicative of the first user accessing the service. The processor is further configured to calculate a comparison between the first vector and a reference vector, wherein the reference vector comprises an averaged distribution of characteristics for a plurality of users accessing the service. The processor is further configured to determine that the service is under a denial-of-service attack based on the comparison between the first vector and the reference vector.

According to another example, a computer-readable medium is provided comprising instructions that comprises computer executable instructions for performing any of the methods disclosed herein.

The above simplified summary of example embodiments of the invention serves to provide a basic understanding of the present disclosure. This summary is not an extensive overview of all contemplated examples, and is intended to neither identify key or critical elements of all examples nor delineate the scope of any or all examples of the present invention. Its sole purpose is to present one or more examples in a simplified form as a prelude to the more detailed description of the disclosure that follows. To the accomplishment of the foregoing, the one or more examples of the present invention include the features described and exemplarily pointed out in the claims.

### BRIEF DESCRIPTION OF THE DRAWINGS

The accompanying drawings, which are incorporated into and constitute a part of this specification, illustrate one or more examples of the present invention and, together with the detailed description, serve to explain their principles and implementations.
**Fig. 1** is a block diagram illustrating a system for processing traffic and protecting against DDoS attacks.
**Fig. 2** presents a histogram of a histogram of requests from a typical human user.
**Fig. 3** presents a histogram of requests from a malicious user (bot).
**Fig. 4** presents a histogram of requests from a search engine bot.
**Fig. 5** is a flowchart illustrating a method for protecting against DDoS attacks based on data gathered from users.
**Fig. 6** is a block diagram illustrating a system for processing traffic and protecting against DDoS attacks.
**Fig. 7A** shows an example of the interaction of a protection module and a security application during a detected attack.
**Fig. 7B** shows an example of the interaction of the protection module and the security application when an attack is let through.
**Fig. 8** is a block diagram of a general-purpose computer system on which the disclosed system and method can be implemented.

### DETAILED DESCRIPTION

Disclosed herein are examples of system and method for detecting DDoS attacks on user computers. Those of ordinary skill in the art will realize that the following description is illustrative only and is not intended to be in any way limiting. Other examples will readily suggest themselves to those skilled in the art having the benefit of this disclosure. Reference will now be made in detail to implementations of the example embodiments as illustrated in the accompanying drawings. The same reference indicators will be used to the extent possible throughout the drawings and the following description to refer to the same or like items.

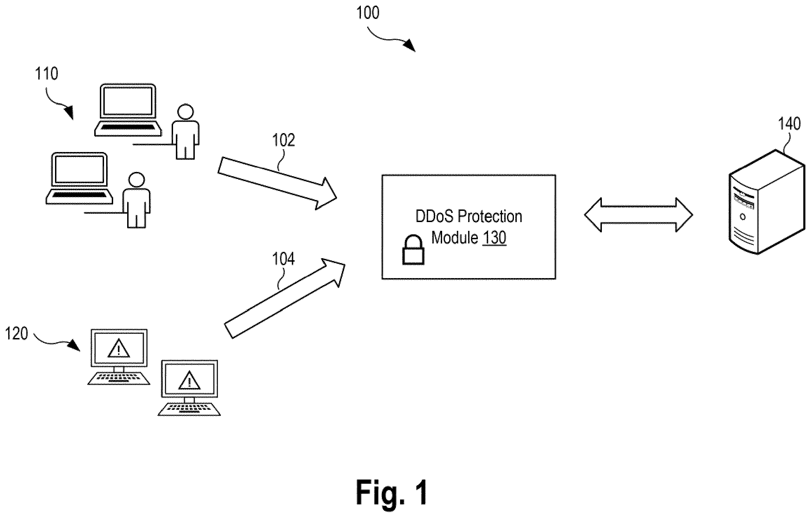

**Fig. 1** is a block diagram illustrating an exemplary system **100** for processing traffic and protecting against DDoS attacks. The system **100** includes a DDoS protection module **130** communicatively connected to a server **140** and configured to protect the server **140** against DDoS attacks. As shown, a plurality of (legitimate) users **110** may make requests **102** to the server **140.** In the following, all examples shall pertain to the protection of this server **140.** Besides the server itself in the traditional understanding (i.e., a website where the users **110** go from their browsers), there may also be present any given web services constructed with the use of the modern standards like HTML, XML, WSDL (Web Service Definition Language), SOAP. Furthermore, the server **140** may provide interfaces for access to other services, such as a database management system or DBMS (not shown). It should also be understood that the server **140** may include not just one physical computer (server), but an entire group (a cluster or data center) having their own load balancing mechanisms.

Requests may arrive at the server **140** not only from ordinary users **110** but also from malicious users (or bots) **120.** The goal of such users **120** is to attack the server **140** using a plurality of requests **104.** In some examples, the requests **104** constitute a bandwidth-flood directed against the bandwidth of the server **140,** both in terms of quantity (bytes per second) and frequency (requests per second), which affects the network bandwidth itself and the resources of the server **140** (e.g., CPU) to handle the flood of requests. In some examples, the attack may be an application-layer attack directed against applications running on the server (such as a web server). It is noted that both ordinary users **110** and malicious users **120** are clients of the server **140.** For protection against such attacks, the DDoS protection module **130** is used. The present disclosure shall examine its working in more detail, for which it is necessary to discuss in more detail the process of a user visiting a server.

A user 110 (or a malicious user **120)** sends a request (e.g., request **102, 104)** to the server **140,** e.g., using a web browser application, or they send a data packet already formatted in a special way. For example, the request may be an HTTP request specifying a GET method, or in other cases, a POST method. An example request having a plurality of parameters is provided below:
1 GET /path/to/resource/ HTTP/1.1
2 Host: site.com
3 User-Agent: Mozilla/5.0 (Windows; U; Windows NT 6.1; en-US; rv:1.9.1.5)
4 Gecko/20091102 Firefox/3.5.5 (.NET CLR 3.5.30729)
5 Accept: text/html,application/xhtml+xml,application/xml;q=0.9,*/*;q=0.8
6 Accept-Language: en-us,en;q=0.5
7 Accept-Encoding: gzip,deflate
8 Accept-Charset: ISO-8859-1,utf-8;q=0.7,*;q=0.7
9 Keep-Alive: 300
10 Connection: keep-alive
11 Cookie: PHPSESSID=r2t5uvjq435r4q7ib3vtdjq120
12 Pragma: no-cache
13 Cache-Control: no-cache

### Listing 1: Example HTTP request

As shown in Lines 1 and 2, the request includes a path to a source by which the user gains access. In the example above, the request specifies the path "/path/to/resource/" and a name of host (e.g. site.com). The path may be formatted as a Universal Resource Identifier (URI), also referred to as a Universal Resource Location (URL) for access to web pages. The path may be unique or dynamic, i.e., formatted during an exchange of information between the user's browser and the server **140.** By using hashing methods, such as fuzzy hash sums, it is possible to format a finite set of paths for access to the server **140.**

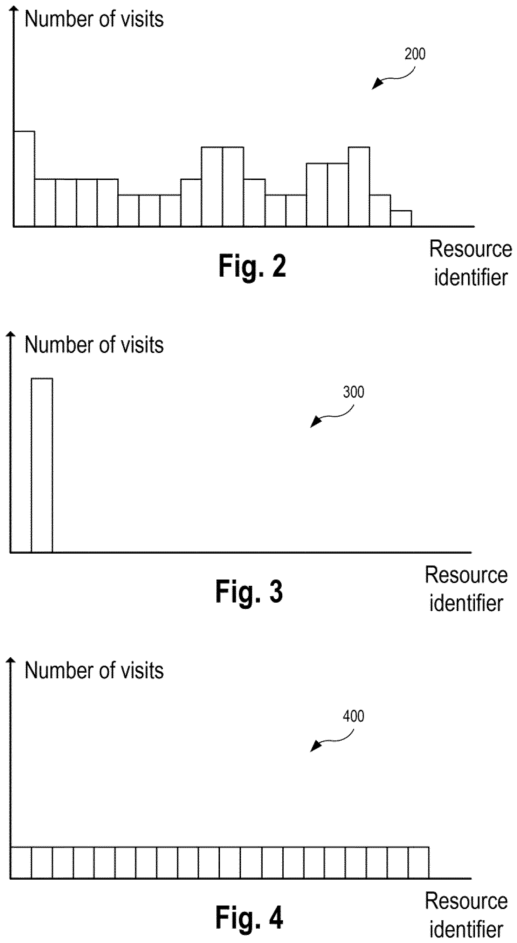

Thus, for each user (e.g., users **110, 120),** it is possible to construct a histogram of a number of requests to the server **140** by path identifier. **Fig. 2** depicts such a histogram **200.** Ordinary users navigate through the site, sending requests to the server **140,** as a result of which the histogram **200** of their visits usually includes a number of requests with different paths. In one example scenario involving e-commerce, a user first enters an online store's URL into the web browser (first path), searches for a desired product (several different paths), reads reviews and places an order (again, several different paths) within the online store.

In one example, for each user, it is possible to construct a histogram based on the frequency of requests made to the server **140.** Ordinary users navigate through the site, sending requests manually. Thus, for example, even when the "Refresh" button is pressed repeatedly in the browser, the frequency of requests of an ordinary user does not exceed a certain threshold requests per second, say, 5 requests per second.

In one example, the histogram of the frequency of making requests is constructed by using the page (URL) accessed by the user. Thus, the fewer links the page contains to other pages, the fewer requests (in quantity and in frequency) are made by the user when navigating from this page.

In another example, the histogram of the frequency of requests made is constructed using the protocol by which the user is interacting. Thus, for example, the TCP protocol guarantees delivery of packets, and therefore a repeated request to the same page will indicate an attack.

In another example, the histogram of the frequency of requests made is constructed using the content of the resource (e.g., URL, webpage) accessed by the user. Thus, if the page contains a certain refreshable chart (such as Forex), the normal refresh frequency is once every 5 seconds. If the page contains news (such as the site of a news agency), the normal refresh frequency is once every minute. But if the page contains static information (such as a Wikipedia page), repeated access of the page may also indicate the start of an attack on the service.

**Fig. 3** presents a histogram **300** of requests on the part of a malicious user (bot) **120,** which generally gains access by a certain path (occasionally several paths), as can be seen as a single column in the histogram. This behavior is not similar to the behavior of an ordinary user **110** in **Fig. 2****.** For sake of comparison, **Fig. 4** presents a histogram **400** of requests from a search engine bot, sometimes referred to as a web crawler or spider. Search engine bots are programs that traverse web sites, generally by using methods of recursive traversal in order to examine all the pages on the web site, and then construct its site map. As can be seen from these histograms **200, 300, 400,** the behavior of the different users (or programs and bots) may differ greatly, which can be used by the DDoS protection module **130.** In the following, the DDoS protection module **130** shall be described as the protection module **130** for short.

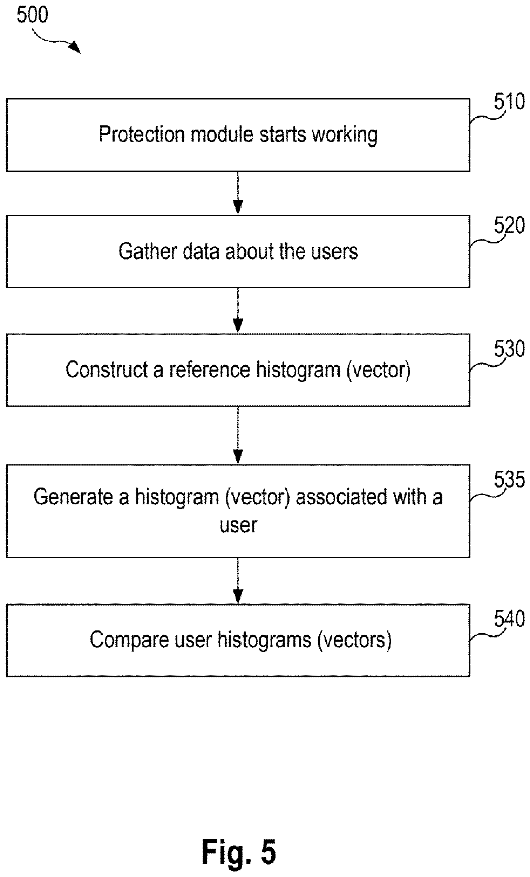

**Fig. 5** is a flowchart illustrating a method **500** for protecting against DDoS attacks based on data gathered from users according to an example. It is noted that the following description of the exemplary method makes reference to the system and components described above. At the time of step **510** the protection module **130** has no data on the users and at the time of the commencement of its work, the protection module **130** needs to gather statistics on every possible user (both ordinary **110** and malicious **120),** which is done during step **520.**

At step **520,** the protection module **130** generates a reference vector based on the gathered data. The reference vector may include an averaged distribution of characteristics for a plurality of users accessing the service. In some examples, the protection module **130** generates a reference vector based on gathered data associated with parameters of HTTP requests from the plurality of users. In another example, the protection module **130** may gather data having path specified by requests to the service from the plurality of users, and generates the reference vector as an averaged frequency of requests by path.

The duration of step **520** may be from a duration comprised of several seconds or minutes, or to longer durations, such as days or weeks. In some examples, the duration of gathering the data (step **520)** may be dynamically modified during operations based on feedback to the protection module's ability to detect DoS attacks. As a rule, already after several minutes, it will be possible to construct in step **530** a reference histogram, which is an averaged histogram for all the users. The primary assumption in this case is that the overwhelming majority of users are ordinary (legitimate) users **110** and the data about them makes it possible to "smooth out" the data about the malicious users **120.**

In one example, the protection module **130,** after being launched, uses a histogram of users obtained statistically on other resources. For example, the protection module **130** may receive a histogram of user requests received from a security network service. The security network service may be a cloud-based service that compiles and provides data related to new or already known threats, applications' reputation data, websites' reputation data, and other data related to detected threats and suspicious activities. An example of a security network service may be the Kaspersky Security Network (KSN) made available by Kaspersky Labs®.

Further on in the context of the application, the present disclosure shall replace the concept of the histogram with a vector, which is comprised of a number of properties characterizing a user accessing the server **140.** The vector may include the already mentioned data on the paths (URIs) requested by the user (visited by using a browser). The vector may further include other parameters derived from the received requests. In some examples, the vector may include an indication of the protocol (and version) of the request, such as "HTTP 1.1". In some examples, the vector may include information about the port number on which the request is received. In some examples, the vector may include header fields of the received requests, such as "User-Agent", or "Referrer" (in the case of HTTP); information about the (source) IP address of the user; an SSL session identifier; the server's response code to a request, and other information.

In step **535,** the protection module **130** generates a vector associated with the user comprised of a plurality of characteristics indicative of the user accessing the service. In step **540,** the protection module **130** may compare the generated vector with the reference vector (histogram), to determine how much a particular user fits the profile of a standard user, which, as previously noted, corresponds to a certain "average" user. In one example, an "average" (standard) user is a conventional user whose vector is an arithmetic mean in regards to all obtained vectors. Other methods of calculating mean values may employ a weighted arithmetic mean, a harmonic mean, or a weighted harmonic mean. In some examples, the protection module **130** may determine that the service is under a denial-of-service attack based on the comparison between the generated vector and the reference vector.

Comparison of the vectors may be done with the use of different comparison techniques, such as the Levenshtein distance, Hemming distance, the Jaccard index, and other metrics. With regard to the use of such comparison metrics, it may be said that the described technique refrains from concepts such as whether a particular user is "good" (users **110)** or "bad" (users **120).** One may consider a good (legitimate) user to be one whose distance between their vector and the vector of the standard user (i.e., reference vector) to be less than a specified threshold value. By using such a metric, one may perform a classification of the users, such as seen in Table 1 below.

**Table 1: Example Classification**

| **Difference between user's vector and reference vector** | **Classification of user** |
|---|---|
| < 0.1 | Ordinary (legitimate) user |
| < 0.3 | Search engine bot |
| > 1 | Malicious user |

As shown in Table 1, responsive to determining the calculated difference between a user's vector and the reference vector exceeds a threshold value (e.g., > 1), the protection module **130** may determine (i.e., classify) that user as a malicious user. In other cases, responsive to determining the calculated difference is less than a second threshold value (e.g., < 0.1), the protection module **130** may determine (classify) that the user is a legitimate user.

For low-and-slow attacks, one may additionally analyze factors on the level of the TCP protocol, such as the transmission speed of requests, and the generated responses from the user (in the case of slow HTTP POST attacks), including these parameters in the user's vector. Such attacks can be characterized by a low transmittal speed of requests as compared to ordinary DDoS attacks on bandwidth. For example, 1000 connections with 200 requests per second are enough for a web server to be able to handle only a third of the connections and others are pending. The requests themselves may contain allowable data (for example, properly formatted headers), which does not allow judging each request alone as malicious.

It has been determined the principal characteristics of low-and-slow attacks may be as follows. The requests from low-and-slow attacks are similar to requests from legitimate users **110.** The conventional techniques for detecting DDoS attacks (e.g., bandwidth floods) do not allow detection of such an attack. Methods from Intrusion Prevention systems (IPS) and Intrusion Detection systems (IDS) that are based on signature detection or detection of anomalies also cannot detect such an attack. A low-and-slow attack does not require a large number of resources and may be carried out from a single computer. Such attacks may put a web server out of commission, even one with a large reserve hardware capacity. Examples of the present invention will now describe a more detailed utilization and comparison of the vectors of users taking into account data from the infrastructure of the server **140.**

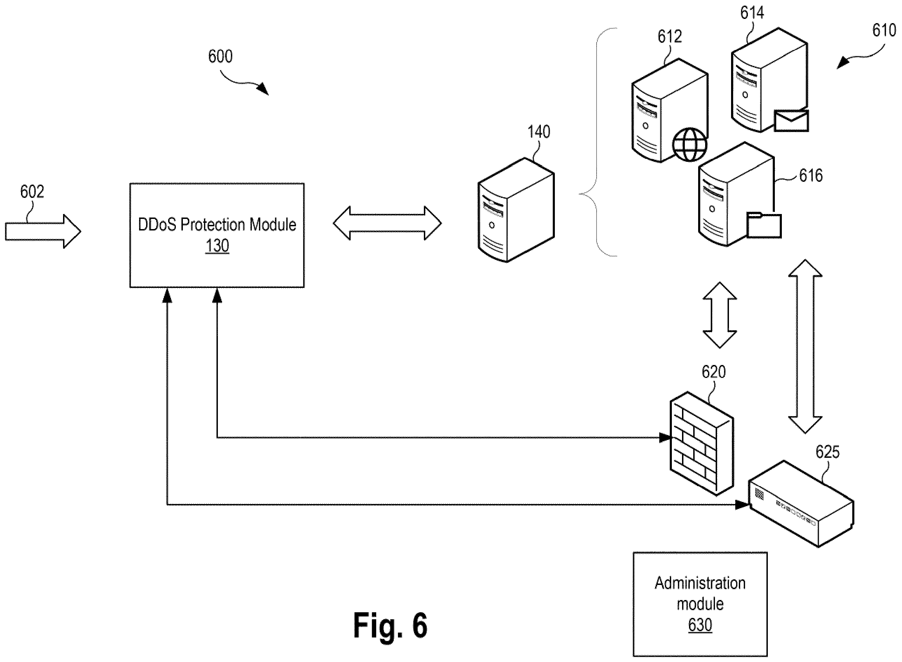

**Fig. 6** is a block diagram illustrating an exemplary system **600** for processing traffic and protecting against DDoS attacks. The system **600** includes a DDoS protection module **130** communicatively connected to a server **140** and configured to protect the server **140** against DDoS attacks. The system **600** is similar to the system **100** depicted in **Fig. 1** except that, on the side of the server **140,** the server-side infrastructure is represented in further detail. For example, the server **140** may include various services **610** (such as web server **612,** mail server **614,** FTP server **616,** and others) executing thereon.

According to one example, the system **600** may include one or more applications **620** responsible for security. The security applications **620** may be IPS/IDS solutions, firewall(s), elements of SIEM (Security Information and Event Management) solutions, and DLP modules. Examples of such solutions are applications such as Kaspersky Security® for Microsoft Exchange Servers™ or Endpoint Security for Windows™. In one example, the system **600** may further include computing and/or networking hardware **625** with built-in protection mechanisms, for example, such as routers made available by Cisco®. The security application(s) **620** and/or hardware **625** may obtain information from the services **610,** configure them (change their settings), and exchange information with the protection module **130.** The information exchange between the protection module **130** and the application(s) **620** may be done with the use of known protocols and data formats, such as JSON (JavaScript Object Notation). In the following, by application(s) **620,** the present disclosure refers to a full set of applications **620** responsible for computer security. In one example, the security application **620** is the firmware of at least one of the hardware devices **625.**

According to one example, the system **600** includes an administration module **630** (e.g., executing as a software application) configured to centrally manage the security applications **620** and hardware with built-in protection mechanisms **625.** The administration module **630** may be used (e.g., by a system administrator) to generate security policies for the system **600** and distribute configurations of the various security applications **620** and hardware devices **625** according to those security policies. Examples of an administration module **630** may be applications such as Kaspersky Security Center™ or McAfee ePolicy Orchestrator™.

In some examples, the protection module 130 may be configured to process event notifications received by the security application **620** (e.g., from the services **610).** Examples of notifications which may be received from the services **610** by the security application **620** and how this information can be processed by the application **620** and the protection module **130** are provided below.

### Example 1

Because of an attack on the server **140,** one of the services **610,** such as the web server **612,** has stopped properly handling requests **602** from the users. In turn, the application **620** restarts the service **610,** and may also change the settings of the service **610** to more suitable ones for protection against an attack. For example, the security application **620** may modify a web server configuration file (such as "httpd.conf" in the case of an Apache web server) to set a timeout for receiving an HTTP request header and the HTTP request body from a user. If a user fails to send a header of body data within a configured timeout period, the web server **612** sends a request time out error (e.g., 408 REQUEST TIME OUT). The below example configuration file allows up a user up to 20 seconds to send the header data and an maximum of 40 seconds for the headers to complete (i.e., "header=20-40"):
1 <IfModule mod_reqtimeout.c>
2 RequestReadTimeout header=20-40,MinRate=500 body=20,MinRate=500
3 </IfModule>

### Listing 2: Example Configuration File

In addition, the application **620** sends data to the protection module **130** as to the incorrect working of the service **610** for subsequent reconfiguration of the working parameters of the protection module **130.** Examples of reconfiguration of the working of the protection module **130** shall be given below.

### Example 2

In one example, because of an attack on the server **140,** one of the services **610,** such as a web server **612,** stopped properly handling the requests of the users. In turn, the application **620** receives information from the protection module **130** that the attack was directed at a particular version of the web server (e.g., Apache version 2.2.15), and for successful protection against it a supplemental web server (such as nginx®) is turned on in proxy mode before the attacked web server **612.**

### Example 3

In another example, the protection module **130** may detect that a user **120** has an atypical vector associated with the behavior of constantly accessing a page with a password. In response, the protection module **130** may send information about this user **120** to a security application **620.** On the part of the application **620** a conclusion is drawn that a brute force attack is occurring and it is necessary either to reconfigure the corresponding application or module (such as IPS) or to add the IP address of the computer of the user **120** from which this attack is occurring to the blacklist.

### Example 4

In another example, the protection module **130** sends information about a user **110** who has an atypical vector, in which it is evident that the user **110** is constantly accessing a particular service **610** (such as constantly downloading files from an FTP server **616).** Even though the IP address of the computer of the user **110** is on a white list, such information from the protection module **130** will result in the conclusion, on the part of the application **620,** that a data leak is occurring and that it is necessary either to reconfigure the corresponding application or module (such as data loss prevention, or DLP) or to add the IP address of the computer of the user **110** from which this attack is occurring to the blacklist.

### Example 5

In another example, the application **620** may determine that an attack of a HTTP Response Splitting type is occurring. Such an attack generally involves the absence of a proper HTTP verification of a header on the part of a web server. In response to such an attack, the application **620** may reconfigure the protection module **130** for analysis of the HTTP headers.

Examples shall be considered for the reconfiguration of the protection module **130** to detect slow-type cyberattacks based on information provided by the security applications **620** and hardware **625.** As already mentioned, the vector may include data and metrics indicating, for example, the number of pages visited or requests for their URIs in an interval of time, the protocol being used (such as HTTP), the number of the port; the headers, and the IP address.

In one example of a change to a vector, the application **620** alerts the protection module **130** as to the fact that the web server **612** has ceased handling requests of users because of a possible low-and-slow cyberattack. Upon analysis of this information, the protection module **130** changes the interval of time in which information is gathered as to the number of pages visited or requests for their URIs - for example, from 10 minutes to 5 minutes. As a result of this, according to the classification example given above, the difference between the vector of the user and the reference vector has exceeded 1 relative to the reference vector, and a malicious user **120** who is carrying out a low-and-slow cyberattack will now be detected as a result of the modified vector.

Another example of a change to a vector involves solving a problem related to a large volume of data. For example, the vector may be over-inclusive with too much data (i.e., noise), such that none of the vectors compared with the reference vector exceeds the threshold value, and all the users are deemed normal (legitimate). However, if certain data is excluded from the vector - for example, information on the headers, which may be identical in the overwhelming majority of users (both ordinary **110** and malicious **120)** - then the values of the vectors will be changed and it will become possible to classify the users more accurately. One example of the solution of such a problem (dimensionality reduction) is the method of principal components (principal component analysis, PCA).

Yet another example of changing the vector includes the addition of new parameters. For example, after adding another service **610** which works with the REST protocol, the protection module **130** may analyze data relating to the operations of the new service. One example of the data transmitted via this protocol is shown below.

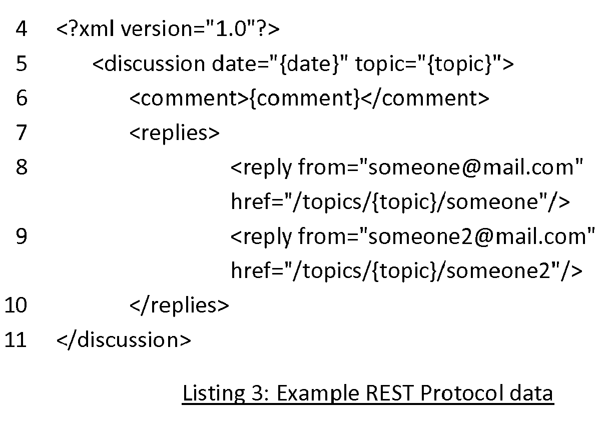

### Listing 3: Example REST Protocol data

Thus, for the protection module **130** there is also added a parser of the protocol being used, which will allow information to be extracted as to the necessary tags (such as the <reply> tag), which it will be possible to insert into the vector for the analysis.

The present disclosure also presents an example of a possible correlation of data between the protection module **130** and the application **620.** For example, the protection module **130** ascertains a DDoS attack has occurred at company A. Afterwards it was likewise discovered that during the attack, some of the services **610** did not work properly. From one of the DBMS (likewise one of the services **610),** important information was transcribed, which was recorded in one of the logs of the application **620.** Thus, it may be determined that the DDoS attack was used to draw attention away from the theft of data. For the future detection of such correlations, the following information is saved in the form of a rule as follows. In response to determining an attack from a vector and that the vector has specified characteristics, then the protection module **130** configures the application **620** (such as the DLP or IDS modules) to counteract the leakage of data on the part of one of the services **610** (such as the DBMS). Such a rule may be saved and used by a linking of the protection module **130** and the application **620** on the part of any other company utilizing such a service.

In some examples, the protection module **130** may generate one or more rules with the help of machine learning methods. Examples of machine learning techniques that may be used to generate rules for configuring the security application 620 include the use of regression models, such as linear or logical regression, support vector machine, artificial neural networks, and clustering.

In the example of a simple neural network with one hidden layer it is possible to construct rules analogous to the one given above. For example, the neurons from the input layer of the neural net will receive data from the protection module **130.** The learning (i.e., the assignment of weights to neurons) can be done on the basis of already known incidents.

Furthermore, the aforementioned rules may be written in high-level language, such as JavaScript, and the rules will assume the following appearance:

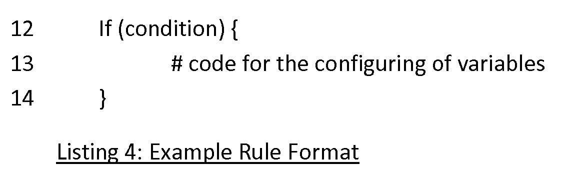

### Listing 4: Example Rule Format

In one example, the administration module **630** is may be configured to modify and manage configurations of applications **620** and hardware **625** with built-in protection mechanisms using automation technology. This technology provides a network administrator with the ability to automate the antivirus protection or control the settings of the applications **620** and hardware **625,** with the aid of writing scripts and startup scenarios. An example of such technology is Administration Kit Automation 10 made available in Kaspersky Security Center™ 10. In some examples, the administration module **620** may receive a script using OLE components (Object Linking and Embedding) or ActiveX components. The script may be written in languages, such as Jscript and VBScript, as well as in high-level languages which support the OLE technology (such as C, C++, Visual Basic, Visual Basic .NET, C#, J#). Thus, the operations of the administration module **630** can be fully automated in the case when the configuration of the applications **620** and the hardware with built-in protection mechanisms **625** is done with the aid of the aforementioned rules which have been written in high-level languages.

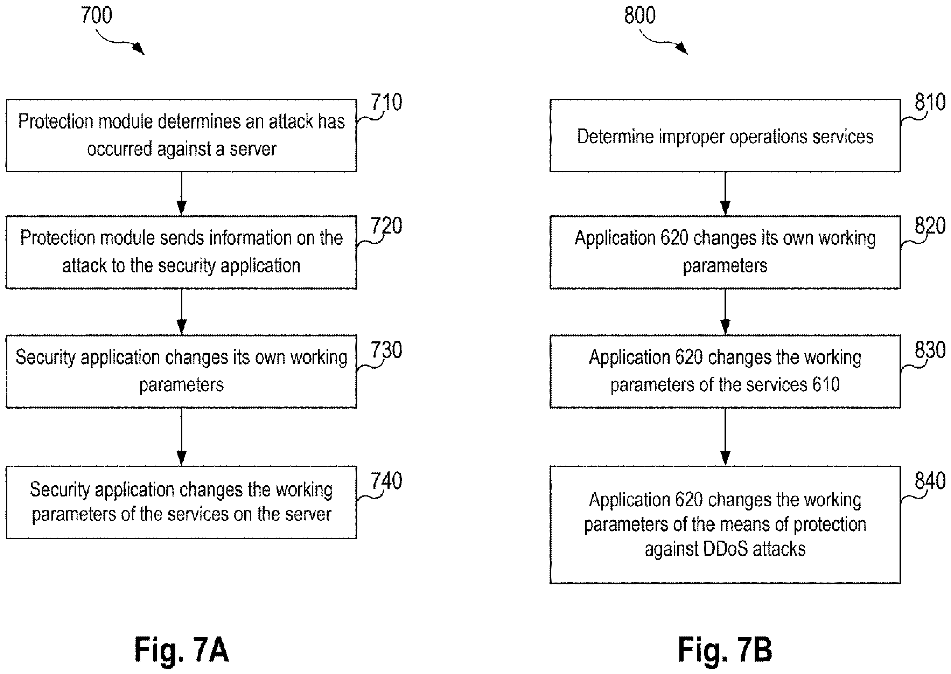

**Fig. 7A** shows an example of the interaction **700** of the protection module **130** and the application **620** during a detected attack on the part of the protection module **130.** In step **710** the protection module **130** determines a DoS attack (or any other attack which can be detected, such as the "Low and Slow" type) against the server **140** and its services **610.** Next, in step **720,** the protection module **130** sends information about the parameters of the attack (its vector) to the application **620.** The application **620** in turn makes changes to the mechanism of its own working. For example, the security application **620** may add the IP address of the attacker to a blacklist. Also during step **740** the application **620** makes changes to the operating parameters of the services **610** - for example, it modifies the operational parameters of a web server by updating its configuration file and restarting the service.

**Fig. 7B** shows an example of the interaction **800** of the protection module **130** and the application **620** when an attack is passed through (e.g. missed) on the part of the protection module **130.** The application **620** in step **810** determines that one of the services is running improperly - for example, the web server **612** is not responding to requests from users or the DBMS is transmitting unusually large volumes of data. If such anomalies have been registered, then in step **820** the application **620** changes the parameters of its own operation. For example, the application **620** starts an antivirus scan of the computer where the improperly running services **610** are located. Subsequently, in step **830,** the security application **630** changes the operating parameters of the aforementioned services in whose execution the anomaly was detected. After this, in step **840,** the application **620** makes changes to the operating parameters of the protection module **130.** For example, the security application **620** may change the interval of time during which data is gathered on user requests from the server **140** (and the corresponding services **610).**

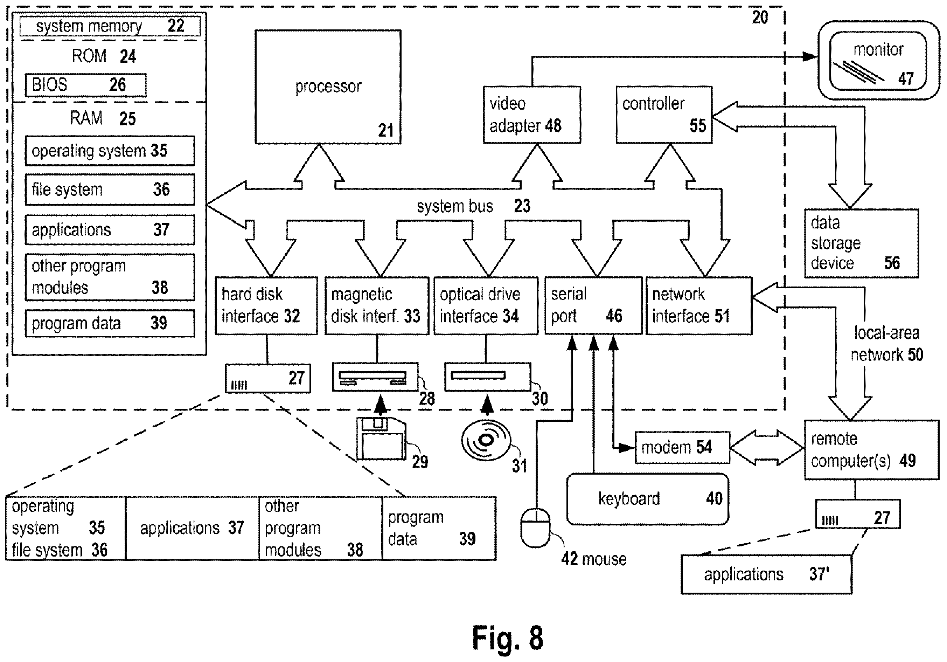

In the present disclosure, the modules and devices **630, 620, 625,** and **140** may be implemented as actual devices, systems, components, a group of components realized with the use of hardware, such as integrated microcircuits (application-specific integrated circuit, ASIC) or a programmable gate array (field-programmable gate array, FPGA) or, for example, in the form of a combination of software and hardware, such as a microprocessor system and a set of software instructions, as well as neuromorphic chips (neurosynaptic chips). The functionality of the modules **630, 620, 625** and **140** can be realized exclusively by hardware, and also in the form of a combination, where some of the functionality is realized by software, and some by hardware (software/hardware complex). In some examples, some of the modules **630, 620, 625** and **140** may be implemented on the processor of a general-purpose computer system (described in **Fig. 8****).**

**Fig. 8** is a block diagram illustrating a general-purpose computer system **20** on which examples of systems and methods for protecting against a DDoS attack may be implemented. It should be noted that the computer system **20** can correspond to the modules **130, 630,** servers **140,** and hardware **625** described earlier.

As shown, the computer system **20** (which may be a personal computer or a server) includes a central processing unit **21,** a system memory **22,** and a system bus **23** connecting the various system components, including the memory associated with the central processing unit **21.** As will be appreciated by those of ordinary skill in the art, the system bus **23** may comprise a bus memory or bus memory controller, a peripheral bus, and a local bus that is able to interact with any other bus architecture. The system memory may include permanent memory (ROM) **24** and random-access memory (RAM) **25.** The basic input/output system (BIOS) **26** may store the basic procedures for transfer of information between elements of the computer system **20,** such as those at the time of loading the operating system with the use of the ROM **24.**

The computer system **20,** may also comprise a hard disk **27** for reading and writing data, a magnetic disk drive **28** for reading and writing on removable magnetic disks 29, and an optical drive **30** for reading and writing removable optical disks **31,** such as CD-ROM, DVD-ROM and other optical media. The hard disk **27,** the magnetic disk drive **28,** and the optical drive **30** are connected to the system bus **23** across the hard disk interface **32,** the magnetic disk interface **33** and the optical drive interface **34,** respectively. The drives and the corresponding computer information media are power-independent modules for storage of computer instructions, data structures, program modules and other data of the computer system **20.**

The computer system **20** comprises a hard disk **27,** a removable magnetic disk **29** and a removable optical disk **31** connected to the system bus **23** via the controller **55.** It will be understood by those of ordinary skill in the art that any type of media **56** that is able to store data in a form readable by a computer (solid state drives, flash memory cards, digital disks, random-access memory (RAM) and so on) may also be utilized.

The computer system **20** has a file system **36,** in which the operating system **35,** may be stored, as well as additional program applications **37,** other program modules **38,** and program data **39.** A user of the computer system **20** may enter commands and information using keyboard 40, mouse 42, or any other input device known to those of ordinary skill in the art, such as, but not limited to, a microphone, joystick, game controller, scanner, *etc.* Such input devices typically plug into the computer system **20** through a serial port **46,** which in turn is connected to the system bus, but those of ordinary skill in the art will appreciate that input devices may be also be connected in other ways, such as, without limitation, via a parallel port, a game port, or a universal serial bus (USB). A monitor **47** or other type of display device may also be connected to the system bus **23** across an interface, such as a video adapter **48.** In addition to the monitor **47,** the personal computer may be equipped with other peripheral output devices (not shown), such as loudspeakers, a printer, *etc.*

Computer system **20** may operate in a network environment, using a network connection to one or more remote computers **49.** The remote computer (or computers) **49** may be local computer workstations or servers comprising most or all of the aforementioned elements in describing the nature of a computer system **20.** Other devices may also be present in the computer network, such as, but not limited to, routers, network stations, peer devices or other network nodes.

Network connections can form a local-area computer network (LAN) **50** and a wide-area computer network (WAN). Such networks are used in corporate computer networks and internal company networks, and they generally have access to the Internet. In LAN or WAN networks, the personal computer **20** is connected to the local-area network **50** across a network adapter or network interface **51.** When networks are used, the computer system **20** may employ a modem **54** or other modules well known to those of ordinary skill in the art that enable communications with a wide-area computer network such as the Internet. The modem **54,** which may be an internal or external device, may be connected to the system bus **23** by a serial port **46.** It will be appreciated by those of ordinary skill in the art that said network connections are non-limiting examples of numerous well-understood ways of establishing a connection by one computer to another using communication modules.

In various examples, the systems and methods described herein may be implemented in hardware, software, firmware, or any combination thereof. If implemented in software, the methods may be stored as one or more instructions or code on a non-transitory computer-readable medium. Computer-readable medium includes data storage. By way of example, and not limitation, such computer-readable medium can comprise RAM, ROM, EEPROM, CD-ROM, Flash memory or other types of electric, magnetic, or optical storage medium, or any other medium that can be used to carry or store desired program code in the form of instructions or data structures and that can be accessed by a processor of a general purpose computer.

In various examples, the systems and methods described in the present disclosure can be addressed in terms of modules. The term "module" as used herein refers to a real-world device, component, or arrangement of components implemented using hardware, such as by an application specific integrated circuit (ASIC) or field-programmable gate array (FPGA), for example, or as a combination of hardware and software, such as by a microprocessor system and a set of instructions to implement the module's functionality, which (while being executed) transform the microprocessor system into a special-purpose device. A module may also be implemented as a combination of the two, with certain functions facilitated by hardware alone, and other functions facilitated by a combination of hardware and software. In certain implementations, at least a portion, and in some cases, all, of a module may be executed on the processor of a general purpose computer (such as the one described in greater detail in Figure 8, above). Accordingly, each module may be realized in a variety of suitable configurations, and should not be limited to any particular implementation exemplified herein.

In the interest of clarity, not all of the routine features of the examples are disclosed herein. It would be appreciated that in the development of any actual implementation of the present disclosure, numerous implementation-specific decisions must be made in order to achieve the developer's specific goals, and these specific goals will vary for different implementations and different developers. It is understood that such a development effort might be complex and time-consuming, but would nevertheless be a routine undertaking of engineering for those of ordinary skill in the art, having the benefit of this disclosure.

Furthermore, it is to be understood that the phraseology or terminology used herein is for the purpose of description and not of restriction, such that the terminology or phraseology of the present specification is to be interpreted by the skilled in the art in light of the teachings and guidance presented herein, in combination with the knowledge of the skilled in the relevant art(s). Moreover, it is not intended for any term in the specification or claims to be ascribed an uncommon or special meaning unless explicitly set forth as such.

## Claims

1. A method (500) for protecting against a low-and-slow distributed denial-of-service, DDOS, attack, the method comprises:
receiving, during a time interval, at a server (140), one or more requests from a first user for accessing a service executing on the server (140);
generating (535), by a protection module (130) connected to the server, a first vector associated with the first user comprised of a plurality of characteristics indicative of the first user accessing the service during the time interval;
calculating (540), by the protection module (130), a comparison between the first vector and a reference vector, wherein the reference vector comprises an averaged distribution of characteristics for a plurality of users accessing the service;
calculating, by the protection module (130), a difference between the first vector and the reference vector; and
responsive to determining that the calculated difference between the first vector and the reference vector exceeds a first threshold value, determining, by the protection module (130), that the service is under a denial-of-service attack and that the first user is a malicious user; responsive to determining the calculated difference is less than a second threshold value, determining, by the protection module (130), that the service is not under a denial-of-service attack and
that the first user is a legitimate user, wherein the second threshold value is different from the first threshold value;
responsive to determining that the service is not under a denial-of-service attack, sending information about the first user to a security application, when determining that the first vector associated with the first user is atypical;
receiving, by the protection module from the security application, an indication that the service has ceased handling requests due to a possible low-and-slow DDOS attack, in response to the security application determining that a cyberattack is occurring based on the information about the first user; and
responsive to receiving, by the protection module from the security application, the indication that the service has ceased handling requests due to a possible low-and-slow DDOS attack, shortening the time interval, and reducing the second threshold value.

2. The method (500) according to claim 1, further comprising:
gathering (510), by the protection module (130), data associated with requests for the service associated with the plurality of users, wherein the data comprises path identifiers specified by the requests from the plurality of users; and
generating (535), by the protection module (130), the reference vector based on the gathered data comprising an averaged frequency of requests by path identifier.

3. The method (500) according to any of claims 1 to 2, further comprising:
generating (535), by the protection module (130), the reference vector based on gathered data associated with parameters of HTTP requests from the plurality of users.

4. The method (500) according to any of claims 1 to 3, wherein determining that the service is under a denial-of-service attack based on the comparison between the first vector and the reference vector further comprises:
determining, by the protection module (130), that the first vector is indicative of behavior of repeat access requests of a webpage with a password.

5. A system for protecting against a low-and-slow distributed denial-of-service, DDOS, attack, the system comprises:
a server (140) configured to receive, during a time interval, one or more requests from a first user for a service executing on the server (140);
a memory device; and
a hardware processor part of a protection module (130);
wherein the system is configured to:
generate (535), by the protection module (130), a first vector associated with the first user comprised of a plurality of characteristics indicative of the first user accessing the service during the time interval;
calculate (540), by the protection module (130), a comparison between the first vector and a reference vector, wherein the reference vector comprises an averaged distribution of characteristics for a plurality of users accessing the service during the time interval; and
calculate, by the protection module (130), a difference between the first vector and the reference vector; and responsive to determining that the calculated difference between the first vector and the reference vector exceeds a first threshold value, determine, by the protection module (130), that the service is under a denial-of-service attack and that the first user is a malicious user;
responsive to determining the calculated difference is less than a second threshold value, determine, by the protection module (130), that the service is not under a denial-of-service attack and that the first user is a legitimate user, wherein the second threshold value is different from the first threshold value;
responsive to determining that the service is not under a denial-of-service attack, send information about the first user to a security application, when determining that the first vector associated with the first user is atypical; receive, by the protection module from the security application, an indication that the service has ceased handling requests due to a possible low-and-slow DDOS attack, in response to the security application determining that a cyberattack is occurring based on the information about the first user; and
responsive to receiving, by the protection module from the security application, the indication that the service has ceased handling requests due to a possible low-and-slow DDOS attack, shorten the time interval, and reduce the second threshold value.

6. The system according to claim 5, wherein the system is further configured to:
gather (520), by the protection module (130), data associated with requests for the service associated with the plurality of users, wherein the data comprises path identifiers specified by the requests from the plurality of users; and
generate (535), by the protection module (130), the reference vector based on the gathered data comprising an averaged frequency of requests by path identifier.

7. The system according to any of claims 5 to 6, wherein the system is further configured to:
generate (535), by the protection module (130), the reference vector based on gathered data associated with parameters of HTTP requests from the plurality of users.

8. The system according to any of claims 5 to 7, wherein the system is configured to determine, by the protection module (130), that the service is under a denial-of-service attack based on the comparison between the first vector and the reference vector is further configured to:
determine, by the protection module (130), that the first vector is indicative of behavior of repeat access requests of a webpage with a password.

## Patentansprüche

1. Ein Verfahren (500) zum Schutz gegen einen *Low-and-Slow-*DDOS-Angriff (*Distributed Denial-of-Service*)*,* wobei das Verfahren Folgendes umfasst:
Empfangen, während eines Zeitintervalls, an einem Server (140), einer oder mehrerer Anforderungen bzw. Anfragen (*requests*) von einem ersten Benutzer für den Zugriff auf einen Dienst, der auf dem Server (140) ausgeführt wird;
Erzeugen (535), durch ein Schutzmodul (130), das mit dem Server verbunden ist, eines ersten Vektors, der dem ersten Benutzer zugeordnet ist und eine Vielzahl von Merkmalen umfasst, die den Zugriff des ersten Benutzers auf den Dienst während des Zeitintervalls angeben;
Berechnen (540), durch das Schutzmodul (130), eines Vergleichs zwischen dem ersten Vektor und einem Referenzvektor, wobei der Referenzvektor eine gemittelte Verteilung von Merkmalen für eine Vielzahl von Benutzern umfasst, die auf den Dienst zugreifen;
Berechnen, durch das Schutzmodul (130), einer Differenz zwischen dem ersten Vektor und dem Referenzvektor; und
als Reaktion auf die Feststellung, dass die berechnete Differenz zwischen dem ersten Vektor und dem Referenzvektor einen ersten Schwellenwert überschreitet, Bestimmen, durch das Schutzmodul (130), dass der Dienst einem *Denial-of-Service-Angriff* ausgesetzt ist, und dass der erste Benutzer ein böswilliger Benutzer ist; als Reaktion auf die Feststellung, dass die berechnete Differenz kleiner als ein zweiter Schwellenwert ist, Bestimmen, durch das Schutzmodul (130), dass der Dienst einem *Denial-of-Service-Angriff* nicht ausgesetzt ist, und dass der erste Benutzer ein legitimer Benutzer ist, wobei sich der zweite Schwellenwert vom ersten Schwellenwert unterscheidet;
als Reaktion auf die Feststellung, dass der Dienst einem *Denial-of-Service-*Angriff nicht ausgesetzt ist, Senden von Informationen über den ersten Benutzer an eine Sicherheitsanwendung, wenn festgestellt wird, dass der dem ersten Benutzer zugeordnete erste Vektor atypisch ist;
Empfangen, durch das Schutzmodul, einer von der Sicherheitsanwendung ausgehenden Angabe, dass der Dienst die Bearbeitung von Anfragen aufgrund eines möglichen *Low-and-Slow*-DDOS-Angriffs eingestellt hat, als Reaktion darauf, dass die Sicherheitsanwendung basierend auf den Informationen über den ersten Benutzer feststellt, dass ein Cyberangriff stattfindet; und
als Reaktion auf das Empfangen, durch das Schutzmodul, der von der Sicherheitsanwendung ausgehenden Angabe, dass der Dienst die Bearbeitung von Anfragen aufgrund eines möglichen Low-and-Slow-DDOS-Angriffs eingestellt hat, Verkürzen des Zeitintervalls und Verringern des zweiten Schwellenwerts.

2. Das Verfahren (500) nach Anspruch 1, das ferner Folgendes umfasst:
Sammeln (510), durch das Schutzmodul (130), von Daten, die mit Anfragen für den Dienst verknüpft sind, die mit der Vielzahl von Benutzern verknüpft sind, wobei die Daten Pfadkennungen umfassen, die durch die Anfragen seitens der Vielzahl von Benutzern spezifiziert werden; und
Erzeugen (535), durch das Schutzmodul (130), des Referenzvektors basierend auf den gesammelten Daten, die eine nach Pfadkennung gemittelte Häufigkeit von Anfragen umfassen.

3. Das Verfahren (500) nach irgendeinem der Ansprüche von 1 bis 2, das ferner Folgendes umfasst:
Erzeugen (535), durch das Schutzmodul (130), des Referenzvektors basierend auf gesammelten Daten, die mit Parametern von HTTP-Anfragen verknüpft sind, die von der Vielzahl von Benutzern ausgehen.

4. Das Verfahren (500) nach irgendeinem der Ansprüche von 1 bis 3, wobei das Bestimmen, dass der Dienst einem *Denial-of-Service-Angriff* ausgesetzt ist, basierend auf dem Vergleich zwischen dem ersten Vektor und dem Referenzvektor, ferner Folgendes umfasst:
Bestimmen, durch das Schutzmodul (130), dass der erste Vektor ein Verhalten von wiederholten Zugriffs-Anfragen einer Webseite mit einem Passwort anzeigt.

5. Ein System zum Schutz gegen einen verteilten *Low-and-Slow*-DDOS-Angriff (*Distributed Denial-of-Service*)*,* wobei das System Folgendes umfasst:
einen Server (140), der konfiguriert ist, um während eines Zeitintervalls eine oder mehrere Anfragen von einem ersten Benutzer für einen Dienst zu empfangen, der auf dem Server (140) ausgeführt wird;
eine Speichervorrichtung; und
einen Hardwareprozessor als Teil eines Schutzmoduls (130);
wobei das System konfiguriert ist, um Folgendes zu bewerkstelligen:
Erzeugen (535), durch das Schutzmodul (130), eines ersten Vektors, der dem ersten Benutzer zugeordnet ist und eine Vielzahl von Merkmalen umfasst, die den Zugriff des ersten Benutzers auf den Dienst während des Zeitintervalls angeben;
Berechnen (540), durch das Schutzmodul (130), eines Vergleichs zwischen dem ersten Vektor und einem Referenzvektor, wobei der Referenzvektor eine gemittelte Verteilung von Merkmalen für eine Vielzahl von Benutzern umfasst, die während des Zeitintervalls auf den Dienst zugreifen; und
Berechnen, durch das Schutzmodul (130), einer Differenz zwischen dem ersten Vektor und dem Referenzvektor; und
als Reaktion auf die Feststellung, dass die berechnete Differenz zwischen dem ersten Vektor und dem Referenzvektor einen ersten Schwellenwert überschreitet, Bestimmen, durch das Schutzmodul (130), dass der Dienst einem *Denial-of-Service-Angriff* ausgesetzt ist, und dass der erste Benutzer ein böswilliger Benutzer ist;
als Reaktion auf die Feststellung, dass die berechnete Differenz kleiner als ein zweiter Schwellenwert ist, Bestimmen, durch das Schutzmodul (130), dass der Dienst einem *Denial-of-Service-Angriff* nicht ausgesetzt ist, und dass der erste Benutzer ein legitimer Benutzer ist, wobei sich der zweite Schwellenwert vom ersten Schwellenwert unterscheidet;
als Reaktion auf die Feststellung, dass der Dienst einem *Denial-of-Service-*Angriff nicht ausgesetzt ist, Senden von Informationen über den ersten Benutzer an eine Sicherheitsanwendung, wenn festgestellt wird, dass der dem ersten Benutzer zugeordnete erste Vektor atypisch ist;
Empfangen, durch das Schutzmodul, einer von der Sicherheitsanwendung ausgehenden Angabe, dass der Dienst die Bearbeitung von Anfragen aufgrund eines möglichen *Low-and-Slow*-DDOS-Angriffs eingestellt hat, als Reaktion darauf, dass die Sicherheitsanwendung basierend auf den Informationen über den ersten Benutzer feststellt, dass ein Cyberangriff stattfindet; und
als Reaktion auf das Empfangen, durch das Schutzmodul, der von der Sicherheitsanwendung ausgehenden Angabe, dass der Dienst die Bearbeitung von Anfragen aufgrund eines möglichen Low-and-Slow-DDOS-Angriffs eingestellt hat, Verkürzen des Zeitintervalls und Verringern des zweiten Schwellenwerts.

6. Das System nach Anspruch 5, wobei das System ferner konfiguriert ist, um Folgendes zu bewerkstelligen:
Sammeln (520), durch das Schutzmodul (130), von Daten, die mit Anfragen für den Dienst verknüpft sind, die mit der Vielzahl von Benutzern verknüpft sind, wobei die Daten Pfadkennungen umfassen, die durch die Anfragen seitens der Vielzahl von Benutzern spezifiziert werden; und
Erzeugen (535), durch das Schutzmodul (130), des Referenzvektors basierend auf den gesammelten Daten, die eine nach Pfadkennung gemittelte Häufigkeit von Anfragen umfassen.

7. Das System nach irgendeinem der Ansprüche von 5 bis 6, wobei das System ferner konfiguriert ist, um Folgendes zu bewerkstelligen:
Erzeugen (535), durch das Schutzmodul (130), des Referenzvektors basierend auf gesammelten Daten, die mit Parametern von HTTP-Anfragen verknüpft sind, die von der Vielzahl von Benutzern ausgehen.

8. Das System nach irgendeinem der Ansprüche von 5 bis 7, wobei das System konfiguriert ist, um durch das Schutzmodul (130) zu bestimmen, dass der Dienst einem *Denial-of-Service-Angriff* ausgesetzt ist, basierend auf dem Vergleich zwischen dem ersten Vektor und dem Referenzvektor, ferner Folgendes umfasst:
Bestimmen, durch das Schutzmodul (130), dass der erste Vektor ein Verhalten von wiederholten Zugriffs-Anfragen einer Webseite mit einem Passwort anzeigt.

## Revendications

1. Procédé (500) de protection contre une attaque par déni de service distribué, DDOS, faible et lente, le procédé comprenant :
la réception, durant un intervalle de temps, au niveau d'un serveur (140), d'une ou de plusieurs requêtes d'un premier utilisateur pour accéder à un service s'exécutant sur le serveur (140) ;
la génération (535), par un module de protection (130) associé au serveur, d'un premier vecteur associé au premier utilisateur et composé d'une pluralité de caractéristiques indicatives du premier utilisateur qui accède au service durant l'intervalle de temps ;
le calcul (540), par le module de protection (130), d'une comparaison entre le premier vecteur et un vecteur de référence, où le vecteur de référence comprend une moyenne de distribution de caractéristiques d'une pluralité d'utilisateurs accédant au service ;
le calcul, par le module de protection (130), d'une différence entre le premier vecteur et le vecteur de référence ; et
en réponse à la détermination selon laquelle la différence calculée entre le premier vecteur et le vecteur de référence dépasse une première valeur de seuil, la détermination, par le module de protection (130), selon laquelle le service subit une attaque par déni de service et selon laquelle le premier utilisateur est un utilisateur malveillant ; en réponse à la détermination selon laquelle la différence calculée est inférieure à une seconde valeur de seuil, la détermination, par le module de protection (130), selon laquelle le service ne subit pas d'attaque par déni de service et selon laquelle le premier utilisateur est un utilisateur légitime, où la seconde valeur de seuil est différente de la première valeur de seuil ;
en réponse à la détermination selon laquelle le service ne subit pas d'attaque par déni de service, l'envoi d'informations concernant le premier utilisateur à une application de sécurité, quand il est déterminé que le premier vecteur associé au premier utilisateur est atypique ;
la réception, par le module de protection, en provenance de l'application de sécurité, d'une indication selon laquelle le service a cessé de gérer des requêtes en raison d'une éventuelle attaque DDOS faible et lente, en réponse à la détermination par l'application de sécurité selon laquelle une cyber-attaque a lieu sur la base des informations concernant le premier utilisateur ; et
en réponse à la réception, par le module de protection, en provenance de l'application de sécurité, de l'indication selon laquelle le service a cessé de gérer des requêtes en raison d'une éventuelle attaque DDOS faible et lente, le raccourcissement de l'intervalle de temps et la diminution de la seconde valeur de seuil.

2. Procédé (500) selon la revendication 1, comprenant en outre :
la collecte (510), par le module de protection (130), de données associées à des requêtes du service associé à la pluralité d'utilisateurs, où les données comprennent des identificateurs de chemin spécifiés par les requêtes provenant de la pluralité des utilisateurs ; et
la génération (535), par le module de protection (130), du vecteur de référence sur la base des données collectées comprenant une moyenne des fréquences de requêtes par identificateur de chemin.

3. Procédé (500) selon l'une quelconque des revendications 1 à 2, comprenant en outre :
la génération (535), par le module de protection (130), du vecteur de référence sur la base des données collectées associées à des paramètres de requêtes HTTP provenant de la pluralité d'utilisateurs.

4. Procédé (500) selon l'une quelconque des revendications 1 à 3, dans lequel la détermination selon laquelle le service subit une attaque par déni de service sur la base de la comparaison entre le premier vecteur et le vecteur de référence comprend en outre :
la détermination, par le module de protection (130), selon laquelle le premier vecteur est indicatif d'un comportement de requêtes d'accès répétées d'une page Web avec un mot de passe.

5. Système de protection contre une attaque par déni de service distribué, DDOS, faible et lente, le système comprenant :
un serveur (140) configuré pour recevoir, durant un intervalle de temps, une ou plusieurs requêtes d'un premier utilisateur pour un service s'exécutant sur le serveur (140) ;
un dispositif de mémoire ; et
une partie de processeur matériel d'un module de protection (130) ;
dans lequel le système est configuré pour :
la génération (535), par le module de protection (130), d'un premier vecteur associé au premier utilisateur et composé d'une pluralité de caractéristiques indicatives du premier utilisateur qui accède au service durant l'intervalle de temps ;
le calcul (540), par le module de protection (130), d'une comparaison entre le premier vecteur et un vecteur de référence, où le vecteur de référence comprend une moyenne de distributions de caractéristiques d'une pluralité d'utilisateurs accédant au service durant l'intervalle de temps ; et
le calcul, par le module de protection (130), d'une différence entre le premier vecteur et le vecteur de référence ; et
en réponse à la détermination selon laquelle la différence calculée entre le premier vecteur et le vecteur de référence dépasse une première valeur de seuil, la détermination, par le module de protection (130), selon laquelle le service subit une attaque par déni de service et selon laquelle le premier utilisateur est un utilisateur malveillant ;
en réponse à la détermination selon laquelle la différence calculée est inférieure à une seconde valeur de seuil, la détermination, par le module de protection (130), selon laquelle le service ne subit pas d'attaque par déni de service et selon laquelle le premier utilisateur est un utilisateur légitime, la seconde valeur de seuil étant différente de la première valeur de seuil ;
en réponse à la détermination selon laquelle le service ne subit pas d'attaque par déni de service, l'envoi d'informations concernant le premier utilisateur à une application de sécurité, quand il est déterminé que le premier vecteur associé au premier utilisateur est atypique ;
la réception, par le module de protection, en provenance de l'application de sécurité, d'une indication selon laquelle le service a cessé de gérer des requêtes en raison d'une éventuelle attaque DDOS faible et lente, en réponse à la détermination par l'application de sécurité selon laquelle une cyber-attaque a lieu sur la base des informations concernant le premier utilisateur ; et
en réponse à la réception, par le module de protection en provenance de l'application de sécurité, de l'indication selon laquelle le service a cessé de gérer des requêtes en raison d'une éventuelle attaque DDOS faible et lente, la réduction de l'intervalle de temps et la diminution de la seconde valeur de seuil.

6. Système selon la revendication 5, dans lequel le système est configuré en outre pour :
la collecte (520), par le module de protection (130), de données associées à des requêtes pour le service associé à la pluralité d'utilisateurs, où les données comprennent des identificateurs de chemin spécifiés par les requêtes provenant de la pluralité d'utilisateurs ; et
la génération (535), par le module de protection (130), du vecteur de référence sur la base des données collectées comprenant une moyenne des fréquences de requêtes par identificateur de chemin.

7. Système selon l'une quelconque des revendications 5 à 6, dans lequel le système est configuré en outre pour :
la génération (535), par le module de protection (130), du vecteur de référence sur la base des données collectées associées à des paramètres de requêtes HTTP provenant de la pluralité d'utilisateurs.

8. Système selon l'une quelconque des revendications 5 à 7, dans lequel le système est configuré pour la détermination, par le module de protection (130), selon laquelle le service subit une attaque par déni de service sur la base de la comparaison entre le premier vecteur et le vecteur de référence, et est en outre configuré pour :
la détermination, par le module de protection (130), selon laquelle le premier vecteur est indicatif d'un comportement de requêtes d'accès répétées d'une page Web avec un mot de passe.
